# EUROPÄISCHE PATENTSCHRIFT

(11) **EP 4 275 875 B1**
(45) Veröffentlichungstag und Bekanntmachung des Hinweises auf die Patenterteilung: **03.12.2025**
(21) Anmeldenummer: 22173371.0
(22) Anmeldetag: 13.05.2022
(51) Int. Cl.: B29D 30/00, B29D 30/06, G01M 17/02

(54) **ANLAGE ZUR VERMESSUNG VON REIFEN SOWIE ZUGEHÖRIGES BETRIEBSVERFAHREN**
TYRE MEASURING APPARATUS AND RELATED OPERATING METHOD
INSTALLATION DE MESURE DES PNEU, AINSI QUE PROCÉDÉ DE FONCTIONNEMENT ASSOCIÉ

(43) Veröffentlichungstag der Anmeldung: 15.11.2023
(73) Patentinhaber: Hofmann Maschinen- und Anlagenbau GmbH, 67550 Worms (DE)
(72) Erfinder: AUMANN, Stephan, 67551 Worms (DE); NOLANDT, Andreas, 67549 Worms (DE); BORK, Bernhard, 64579 Gernsheim (DE); FURCHTBAR, Felix, 67591 Westhofen (DE)
(74) Vertreter: Tergau & Walkenhorst Intellectual Property GmbH

(56) Entgegenhaltungen:
- EP-A1- 3 757 540
- WO-A1-2019/188110
- WO-A1-2020/203362
- DE-A1- 102015 222 865
- DE-B- 1 282 908
- JP-A- H02 171 632

## Beschreibung

Die Erfindung betrifft eine Anlage zur Vermessung von Reifen, insbesondere Kraftfahrzeugreifen. Sie betrifft weiterhin ein Verfahren zum Betreiben einer derartigen Anlage.

Aus der EP 0 897 107 A2 ist eine auch als Messstand bezeichnete Vorrichtung zur Vermessung eines Reifens bekannt. Diese und ähnliche Anlagen sind üblicherweise für den Einsatz bei Reifenherstellern für Personenkraftwagen und (Leicht-) Lastkraftwagen konzipiert. Schwerpunktmäßig werden auf einer derartigen Anlage die Vermessung hinsichtlich Geometrie, Gleichförmigkeit sowie auch das Auswuchten des Reifens vollzogen. Im Anschluss können in nachgeschalteten Anlagenkomponenten wichtige Markierpunkte mit Hilfe einer Markierstation gesetzt und die geprüften und markierten Reifen durch einen Hubsortierer oder dergleichen ausgeschleust werden.

Für den Messvorgang wird der jeweilige Reifen in einer sogenannten Messfelge eingespannt oder gelagert, die an einer Messaufnahme der Messvorrichtung arretiert ist und sich aus einer oberen und einer unteren Felgenhälfte zusammensetzt. Wenn der Reifen im Messstand über die Fördertechnik eingefördert wurde, wird die obere Felgenhälfte und die untere Felgenhälfte im jeweiligen Reifenwulst positioniert, verriegelt und der Reifen mit Druckluft befüllt. Nach dem Messvorgang wird das so temporär gebildete Rad entlüftet und die Felgenhälften werden wieder auseinander gefahren. Der Reifen wird danach weitertransportiert.

Die bekannten Anlagen können je nach Ausführung Reifen unterschiedlicher Größen vermessen bzw. bearbeiten, typischerweise von 12" bis 28" (Zoll). Hierzu werden in ihrer Größe entsprechend abgestimmte Messfelgen benötigt. Für einen Felgenwechsel bedarf es eines Umbaus, der bislang händisch mit Hilfswerkzeugen vollzogen wird, personalintensiv und körperlich anstrengend ist und verhältnismäßig lange Rüstzeiten in Anspruch nimmt. Es besteht daher Bedarf für eine automatisierte Lösung, mit der der Wechsel der Messfelgen in kurzer Zeit vollzogen werden kann. Die Patentanmeldung WO 2020/203362 A1 offenbart eine Anlage zur Vermessung von Reifen mit einer Messvorrichtung zur Vermessung eines Reifens, bei der eine aus zwei Felgenhälften gebildete Felge zur Einspannung des Reifens verwendet wird und wobei die Vorrichtung ein Ladeportal mit einem verfahrbaren Zubringer zum Transport einer Felge vom Felgenmagazin zur Messvorrichtung und zurück aufweist. Eine weitere Anlage zur Vermessung von Reifen ist in der Patentschrift DE 12 82 908 B offenbart.

Aufgabe der Erfindung ist es, eine einfach und kostengünstig zu errichtende und zu betreibende Anlage zur Vermessung von Reifen anzugeben, mit der auf zuverlässige Weise mit kurzen Taktzeiten Reifen unterschiedlicher Größe vermessen werden können. Des Weiteren soll ein zugehöriges Betriebsverfahren angegeben werden.

Die auf die Vorrichtung bezogene Aufgabe wird erfindungsgemäß gelöst durch eine Anlage mit den Merkmalen des Anspruchs 1.

Demnach ist eine Anlage zur Vermessung von Reifen, insbesondere Kraftfahrzeugreifen, vorgesehen mit
- einer Messvorrichtung zur Vermessung eines Reifens hinsichtlich Geometrie, Gleichförmigkeit und/oder Unwucht, umfassend ein Drehlager mit einer Messaufnahme, in der eine aus zwei Felgenhälften gebildete Felge zur Einspannung des Reifens während der Vermessung verriegelbar ist,
- einem nach Art eines Paternosters oder Rondells ausgebildeten Felgenmagazin mit einem umlaufenden Transportband, an welchem eine Mehrzahl von Magazin-Aufnahmen zur Aufnahme eines Vorrats unterschiedlicher, insbesondere verschieden großer, Felgen ausgebildet ist, und
- einem Ladeportal mit einem entlang von zumindest zwei Achsen oder Richtungen verfahrbaren Zubringer zum Transport einer Felge vom Felgenmagazin zur Messvorrichtung und zurück.

Die Erfindung geht von der Überlegung aus, dass kostenintensive Roboterlösungen vermieden und stattdessen zielgerichtete Automatisierungslösungen eingesetzte werden sollten. Wie sich herausgestellt hat, ist der Einsatz eines nach Art eines Paternosters oder Rondells ausgebildeten Felgenmagazins von Vorteil, weil damit auf beengtem Raum ein Vorrat unterschiedlicher Messfelgen mit definierter Entnahme- und Beladestelle bereitgestellt werden kann. Dadurch kann der Transport der Messfelgen zwischen Felgenmagazin und Messstand mit einem vergleichsweise einfach konstruierten und einfach ansteuerbaren Ladeportal, insbesondere mit einem in zumindest zwei Raumrichtungen verfahrbaren Zubringer, erfolgen.

Besonders vorteilhaft ist es, wenn das Felgenmagazin als liegender Paternosterschrank mit von oben zugänglicher Entnahme- und Beladestelle ausgebildet ist.

Die Konstruktion und die Anlagensteuerung lassen sich besonders einfach halten, wenn der Zubringer mittels Schienen entlang von genau zwei Achsen, insbesondere einer horizontalen und einer vertikalen Achse, geradlinig verfahrbar ist.

**In** vorteilhafter Ausgestaltung ist am Zubringer ein Sensor zur Erfassung einer Markierung an einer Felge angeordnet, wobei eine zugehörige Anlagensteuerung anhand der erfassten Markierung eine vom Zubringer gegriffene oder zu greifende Felge auf Komptabilität mit einem zugeordneten Reifen überprüft. In einer bevorzugten Variante sind die Markierung und der Sensor RFID-basiert.

In verfahrenshafter Sprache stellt die Erfindung ein Verfahren zum Betreiben einer Anlage der genannten Art bereit, wobei
- eine zuvor in der Messvorrichtung verwendete Felge mit dem Zubringer von der Messaufnahme zum Felgenmagazin transportiert und in einer freien Magazin-Aufnahme abgelegt und/oder arretiert wird,
- der Paternoster oder das Rondell anschließend derart gedreht wird, dass der Zubringer eine gewünschte Felge greifen kann,
- die gewünschte Felge anschließend mit dem Zubringer vom Felgenmagazin zur Messvorrichtung transportiert und in der Messaufnahme arretiert wird.

Dabei ist es zweckmäßig, wenn eine aus zwei Felgenhälften gebildete Felge als eine Einheit in einer Magazin-Aufnahme des Felgenmagazins arretiert wird. Gegenüber einer Einzelaufbewahrung von Felgenhälften werden damit Zuordnungsfehler minimiert.

Weiterhin ist es vorteilhaft, wenn der Zubringer zum Ein- oder Ausfördern eines Reifens in die Messvorrichtung eine obere Felgenhälfte von einer an der Messaufnahme arretierten unteren Felgenhälfte löst und abhebt.

Die mit der Erfindung erzielten Vorteile bestehen insbesondere darin, dass durch eine Automatisierung des Felgenwechsels bei einer Anlage zur Vermessung und/oder Prüfung von Reifen der Einsatz von Personal und Hilfswerkzeugen minimiert werden kann. Bei erhöhter Präzision können zugleich die Taktzeiten verkürzt werden. Insbesondere bei Verwendung eines Felgenmagazins vom Typ ,liegender Paternosterschrank' ist der Platzbedarf klein. Die eigentliche Messvorrichtung kann zusammen mit dem Felgenmagazin und dem Ladeportal innerhalb einer kompakten Anlage oder Maschine integriert werden. Das Ladeportal kann dann konstruktiv und von der Ansteuerung her besonders einfach gehalten sein.

Ein Ausführungsbeispiel der Erfindung wird nachfolgend anhand der beigefügten Zeichnungen näher erläutert. Es zeigt:
- FIG. 1: eine perspektivische Ansicht einer Anlage zur automatisierten Vermessung von Reifen,
- FIG. 2: eine Seitenansicht der Anlage,
- FIG. 3: eine weitere Seitenansicht (Frontansicht) der Anlage,

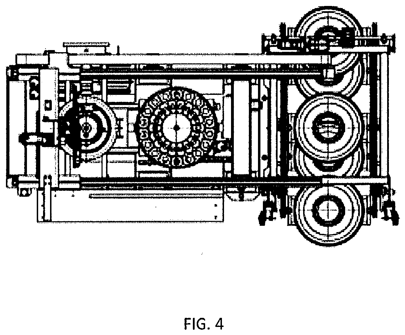

- FIG. 4: eine Draufsicht von oben auf die Anlage.

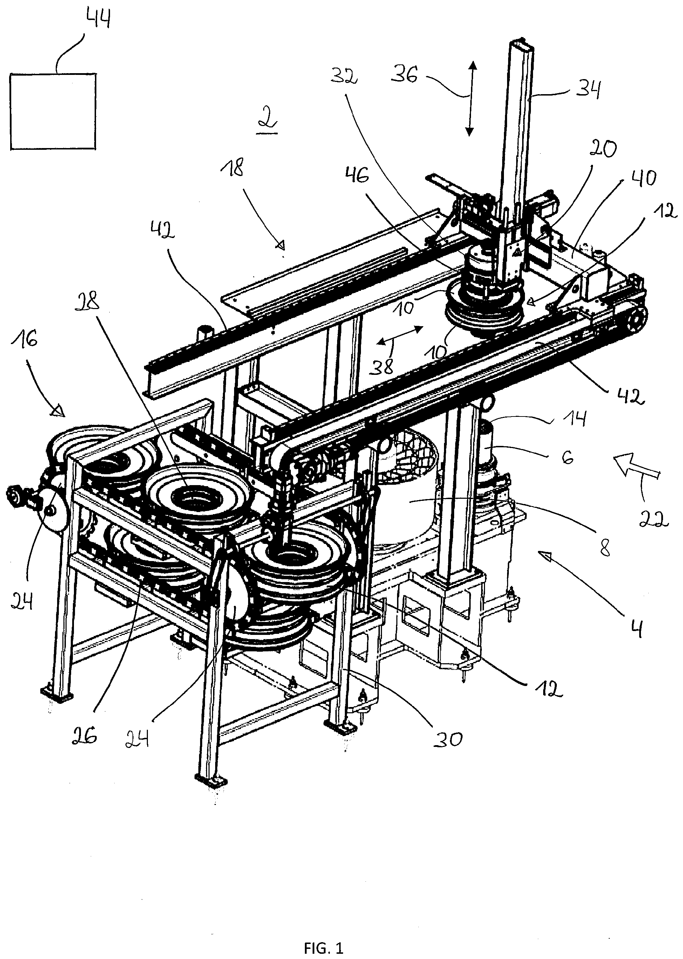

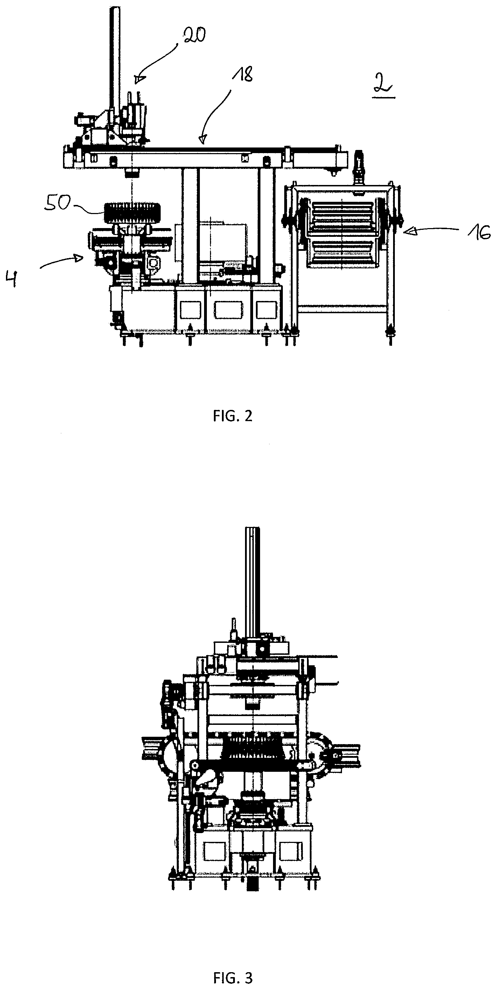

Die in FIG. 1 dargestellte Anlage 2 zur automatisierten Vermessung von Reifen, insbesondere Kraftfahrzeugreifen, umfasst eine hier nur schematisch angedeutete Messvorrichtung 4. Mit der auch als Messstand bezeichneten Messvorrichtung 4 kann eine Vermessung eines Reifens 50 (in FIG. 2 eingezeichnet) beispielsweise hinsichtlich Geometrie, Gleichförmigkeit und/oder Unwucht erfolgen. Die Messvorrichtung 2 kann ähnlich wie die in EP 0 897 107 A2 beschriebene Messvorrichtung aufgebaut sein. Sie umfasst ein Drehlager 6 mit vertikal ausgerichteter Drehachse zur Aufnahme des zu vermessenden Reifens 50 sowie ein mit dem Reifen 50 in Andruck bringbares Druckrad 8, mit dem das Abrollen des Reifens 50 auf einem Fahrbahnbelag simuliert werden kann. Die Befestigung des Reifens 50 am Drehlager 6 erfolgt mit Hilfe von zwei Felgenhälften 10, zwischen denen der Reifen 50 während der Vermessung eingespannt wird. Die beiden Felgenhälften 10 können - mit oder ohne eingespanntem Reifen 50 - miteinander zu einer Einheit verriegelt werden, nämlich einer auch als Messfelge bezeichneten Felge 12. Die in Messposition untere Felgenhälfte 10 wiederum ist mit einer Messaufnahme 14 des Drehlagers 6 verriegelbar, so dass der zwischen den beiden Felgenhälften 10 eingespannte Reifen letztlich mittels der Felgenhälften 10 mit dem Drehlager 6 verriegelbar ist. Während der Messung ist der Reifen 50 also mit vertikaler Drehachse "liegend" gelagert.

Die Begriffe "unten" und "oben" beziehen sich auf die übliche Ausrichtung und Positionierung der Felgenhälften 10 bei der Messung in der Messvorrichtung 4. Im Allgemeinen kann man von einer ersten und zweiten Felgenhälfte sprechen.

Verschiedene Reifengrößen benötigen in der Regel verschiedene Felgengrößen. Vorliegend ist für eine effiziente Prozessführung eine Möglichkeit zum automatisierten Wechseln der Felgen 12 vorgesehen. Dazu umfasst die Anlage 2 weiterhin ein auch als Felgenwechsler bezeichnetes Felgenmagazin 16 zur Aufbewahrung oder Bevorratung von Felgen 12 unterschiedlicher Größen, insbesondere mit unterschiedlichem Durchmesser, sowie ein Ladeportal 18 mit einem Zubringer 20 zum Transport der Felgen 12 vom Felgenmagazin 16 zur Messvorrichtung 4 und zurück. Des Weiteren kann als Bestandteil der Anlage 2 oder als externe Zusatzeinrichtung eine nur in FIG. 1 schematisch angedeutete Fördereinrichtung 22 oder Förderstrecke zum Transport von Reifen zur Messvorrichtung 4 und von ihr weg vorhanden sein.

Das Felgenmagazin 16 ist nach Art eines liegenden oder horizontalen Rondells, Karussells oder Paternosters (Umlaufaufzug) ausgebildet und umfasst ein über Umlenkrollen 24 geführtes, waagerecht orientiertes und umlaufendes Transportband 26, welches über den Umfang hinweg mit einer Mehrzahl (hier im Beispiel 6 Stück) von verriegelbaren Magazin-Aufnahmen 28 für Felgen 12 verschiedener Größen versehen ist. Der Begriff "Transportband" ist vorliegend weit aufzufassen und umfasst auch Ketten, Seile und dergleichen. Die Felgen 12, welche sich wie oben beschrieben aus miteinander verriegelten Felgenhälften 10 zusammensetzen, werden in dem Paternoster liegend und zusammenmontiert aufbewahrt und bei Bedarf transportiert. Durch ein nicht näher dargestelltes Antriebsaggregat mit zugehöriger Steuerung lässt sich das Transportband 26 mit den daran (lösbar) befestigen Felgen 12 in Rotation versetzen und in eine Stellung verfahren, in der sich eine zur Entnahme ausgewählte Felge 12 oder eine nicht besetze (leere) Magazin-Aufnahme 28 zur Aufnahme einer Felge 12 in einer vorgegebenen Wechselposition in einem von oben gut zugänglichen oberen Zentralbereich des Paternosters befindet. Mit anderen Worten dient das als liegender Paternoster ausgestaltete Felgenmagazin 16 als platzsparendes Vorratsregal mit definierter Entnahme- und Beladestelle, zu der die gewünschte Felge 12 oder Magazin-Aufnahme 28 bedarfsweise im Umlaufprinzip gefördert wird. Der restliche Felgenvorrat wird dabei jeweils mit rotiert und verändert daher seine Position im Rondell.

Konkret kann die Konstruktion des Felgenmagazins 16 wie in FIG. 1 angedeutet zwei parallel zueinander in einem definierten Abstand angeordnete Transportbänder 26, vorzugsweise in Gestalt von Zahnketten, umfassen, die über zugehörige Umlenkrollen 24, vorzugsweise in Gestalt von Zahnrädern, geführt sind. Die Umlenkrollen 24 sind vorzugsweise an einem Maschinenrahmen 30 gelagert. Die beiden Transportbänder 26 können synchron angetrieben sein. Alternativ ist nur eines davon angetrieben, und das andere Transportband 26 läuft beim Umlauf passiv mit. Die Magazin-Aufnahmen 28 für die Felgen 12 sind bevorzugt derart an den Transportbändern 26 befestigt, dass gemäß dem Paternosterprinzip eine in den geradlinigen Abschnitten verwirklichte liegende Lagerung der Felgen 12 auch beim Umlauf über die Umlenkrollen erhalten bleibt. Alternativ könnten die Felgen 12 aber auch unter Änderung ihrer Ausrichtung (d. h. aus oben wird unten) über die Umlenkrollen 24 geführt werden.

Für die Felge 12 ist eine Ver- oder Entriegelung mit der Messaufnahme 14 des Drehlagers 6 in der Messvorrichtung 4 vorgesehen. Der Bewegungsablauf der beispielsweise auf dem Prinzip eines Bajonettverschlusses beruhenden Ver- oder Entriegelung umfasst vorteilhafterweise eine Drehbewegung, die mit dem weiter unten näher beschriebenen Zubringer 20 oder einem daran montierten Zusatzteil ausführbar ist. Anstelle von Verriegelung wird auch von Arretierung gesprochen. Es kann auch eine Ver- oder Entriegelung der Felge 12 in der zugeordneten Magazin-Aufnahme 28 des Felgenmagazins 16 vorgesehen sein. Eine derartige Verriegelung erfolgt bevorzugt mittels der unteren Felgenhälfte 10 in analoger Weise (d. h. mit analogem Bewegungsablauf) zur Verrieglung mit der Messaufnahme 14 in der Messvorrichtung 4. Bevorzugt wird die Felge 12 in der Magazin-Aufnahme 28 jedoch einfach nur abgelegt. Durch die bevorzugt durchgängig horizontale Lagerung der Felge 12 im Felgenmagazin 16 ist eine Verrieglung nämlich nicht unbedingt erforderlich. Die Magazin-Aufnahme 28 kann in diesem Fall bevorzugt als Ring, bevorzugt mit trichterförmig oder kegelförmig zulaufender Innenkontur als Einführschräge und Zentrierhilfe für die Felge 12, ausgebildet sein.

Zum Transport einer vom Felgenmagazin 16 entnommenen Felge 12 zur Messvorrichtung 4 und wieder zurück, sprich zum Felgenwechsel, ist ein Ladeportal 18 vorgesehen. Im Allgemeinen könnte diese Aufgabe von einem mehrachsgesteuerten Industrieroboter oder Roboterarm bewältigt werden. Im Hinblick auf die definierte Wechselposition sowohl am Felgenmagazin 16 als auch an der Messvorrichtung 4 ist jedoch eine einfachere Lösung mit einem entlang zweier Achsen linear bzw. geradlinig verfahrbaren Zubringer 20 vorgesehen. Der Zubringer 20 gemäß FIG. 1 umfasst kopfseitig eine mit einer oberen Felgenhälfte 10 verriegelbare Zubringer-Aufnahme 32, die zur Ausführung einer Hub- oder Senkbewegung mittels eines zugeordneten Antriebs entlang einer vertikal ausgerichteten Hubschiene 34 in vertikaler Richtung gemäß Doppelpfeil 36 verfahrbar ist. Des Weiteren ist die Hubschiene 34 mittels eines zugeordneten Antriebs in einer ausgezeichneten Richtung quer zu ihrer Längserstreckung verfahrbar, so dass die Zubringer-Aufnahme 32 lateral - in einer durch die aktuelle Hubhöhe gekennzeichneten horizontalen Ebene - in der durch den Doppelpfeil 38 beschriebenen Richtung verschiebbar ist. Die laterale Richtung entspricht dem Transportweg der Zubringer-Aufnahme 32 vom der Wechselposition oberhalb des Felgenmagazins 16 zum Drehlager 6 der Messvorrichtung 4. Bei Bedarf lassen sich die Hub- oder Senkbewegung und die laterale Bewegung auch simultan oder überlagert ausführen.

Konkret kann die Hubschiene 34 wie in FIG. 1 dargestellt an einer horizontalen Brücke 40 montiert sein, die ihrerseits entlang eines Paares von horizontalen Führungsschienen 42 in der festgelegten lateralen Richtung verfahrbar ist. Der Abstand zwischen den horizontalen Führungsschienen 42 ist so groß gewählt, dass die Zubringer-Aufnahme 32 mitsamt daran verriegelter Felge 12 hindurchfahren kann. In Längsrichtung wird der gesamte oben beschriebene Verfahrweg vom Felgenmagazin 16 zur Messvorrichtung 4 abgedeckt.

Eine lediglich schematisch angedeutete Fördereinrichtung 22 dient dem Transport eines Reifens 50 zu der mit einer passenden Felge 12 bestückten Messvorrichtung 4 und dem anschließenden Abtransport des vermessenen bzw. geprüften Reifens 50. Die Fördereinrichtung 22 bewerkstelligt auch das Aufziehen des Reifens 50 auf die Felge 12 sowie das spätere Abziehen und kann zu diesem Zweck als Hubband ausgebildet sein. Des Weiteren ist eine Druckluftanlage mit zugehöriger Druckluft-Applikationseinheit zur Befüllung des Reifens 50 mit Druckluft vorhanden.

Eine hier nur schematisch angedeutete Anlagensteuerung 44 koordiniert bzw. steuert die Bewegungsabläufe von Messvorrichtung 4, Felgenmagazin 16, Zubringer 20 und ggf. auch der Fördereinrichtung 22. Insbesondere enthält die Anlagensteuerung 44 einen aktuellen Belegungsplan des Felgenmagazins 16, aus dem die Zuordnung der unterschiedlichen Felgen 12 zu den Magazin-Aufnahmen 28 des Rondells sowie deren aktuelle Position hervorgeht.

Da trotz des Belegungsplans eine Fehlbelegung des Rondells mit Felgen 12 oder eine Fehlzuführung einer (nicht passenden) Felge 12 zur Messvorrichtung 4 nicht ganz auszuschließen ist, sind bevorzugt die Felgen 12 oder Felgenhälften 10 mit Markierungen, vorzugsweise in Gestalt von RFID-Transpondern, versehen, welche insbesondere Angaben zur Felgengröße und/oder anderen charakteristischen Eigenschaften enthalten. Ein in den Kopf des Zubringers 20, etwa im Bereich der Zubringer-Aufnahme 32 angebrachter Sensor 46, insbesondere ein RFID-Sensor, erfasst bei der Entnahme einer Felge 12 vom Felgenmagazin 16 oder kurz danach während des Transports zum Drehlager 6 der Messvorrichtung 4 die Markierung und gleicht auf diese Weise ausgelesene charakteristische Felgendaten mit korrespondierenden Daten des zugeführten Reifens 50 ab. Die Erfassung der Reifendaten kann auf analoge Weise mittels Markierungen am Reifen 50 und zugehöriger Sensoren, insbesondere auf Basis der RFIDF-Technologie, erfolgen. Insbesondere wird beim Abgleich die Felgengröße mit der Reifengröße verglichen. Sollten die Angaben nicht miteinander übereinstimmen, wird der Vorgang vor dem Aufziehen des Reifens 50 auf die Felge 12 unterbrochen und ein Alarm ausgegeben, so dass das Bedienpersonal eine manuelle Kontrolle und ggf. eine Korrektur vornehmen kann.

Im Folgenden werden die Vorgänge bei der Vermessung eines Reifes 50 mit Hilfe der oben beschriebenen Anlage 2 genauer erläutert. Ausgangspunkt der Beschreibung ist dabei ein Zustand, in dem zuvor ein Reifen 50 in der Messvorrichtung 4 vermessen wurde und noch auf der Felge 12 aufgezogen ist, die mit dem Drehlager 6 der Messvorrichtung 4 verriegelt ist.

Nach den Messungen fährt der Zubringer 20 des Ladeportals 18 zu der noch am Drehlager 6 der Messvorrichtung 2 fixierten und den Reifen 50 einspannenden Felge 12 und verriegelt mit der oberen Felgenhälfte 10. Die obere Felgenhälfte 10 wird von der unteren Felgenhälfte 10 entkoppelt und mit dem Zubringer 20 nach oben gefahren. Der zuvor vermessene Reifen wird mit Hilfe der Fördereinrichtung 22 von der am Drehlager 6 fixierten unteren Felgenhälfte 10 abgezogen oder abgedrückt und aus der Messvorrichtung 4 ausgefördert.

Nun muss das im zusammenmontierten Zustand die Messfelge bildende Paar von Felgenhälften 10 (auch vereinfachend Felgenpaar genannt) mit Hilfe des Ladeportals 18 und dem Felgenmagazin 16 in der Messaufnahme 14 der Messvorrichtung 4 ausgetauscht werden. Dazu fährt der über der Messaufnahme 14 stehende Zubringer 20 mit der noch arretierten oberen Felgenhälfte 10 vertikal nach unten zur unteren Felgenhälfte 10 und verriegelt die beiden Felgenhälften 10 zu einem eine Einheit bildenden Paar. Die so gebildete Felge 12 wird von der Messvorrichtung 4 gelöst, indem die untere Felgenhälfte 10 in der Messaufnahme 14 entriegelt wird. Die Ver- und Entriegelungsvorgänge können wie bereits erwähnt beispielsweise durch Drehbewegungen oder kombinierte Dreh-Steck-bewegungen mittels der Zubringer-Aufnahme 32 des Zubringers 20 verwirklicht werden, worauf es vorliegend nicht im Detail ankommt.

Danach fährt der Zubringer 20 mit der von ihm gehaltenen Felge 12 vertikal nach oben, in der Regel in die oberste Position. Dort angekommen fährt der Zubringer 20 mit der Felge 12 horizontal in Richtung des Doppelpfeils 38 zur Wechselposition über dem Felgenmagazin 16. Hier wird die Felge 16 vertikal nach unten gesenkt und in eine vorhandene freie Magazin-Aufnahme 28 abgelegt, auf die das Felgenmagazin 16 zuvor eingedreht hatte. Danach fährt der Zubringer 20 leer ein Stück vertikal nach oben, damit das Felgenmagazin 16 auf die gewünschte neue Felge 12 eindrehen kann. Wenn dies geschehen ist, positioniert sich der Zubringer 20 über der eingedrehten Felge 12, und die Anlagensteuerung 44 überprüft mit dem Sensor 46 die Richtigkeit der bereit gestellte Felge 12. Wenn alles seine Richtigkeit hat, verriegelt der Zubringer 20 die neue Felge 12 und hebt sie vom Felgenmagazin 16 ab.

Anschließend fährt der Zubringer 20 wieder zur Messvorrichtung 4 und positioniert die Felge 12 über der Messaufnahme 14. Der Zubringer 20 fährt nun nach unten. Die untere Felgenhälfte 10 wird von der Messaufnahme 14 aufgenommen und verriegelt. Die noch am Zubringer 20 verriegelte obere Felgenhälfte 10 verbleibt dort und wird in vertikal nach oben gefahren und in Grundstellung positioniert.

Jetzt kann der bereitstehende Reifen 50 in die Messvorrichtung 4 eingefördert werden. Der Reifen 50 wird beispielsweise mit einem Hubband nach unten in die untere Felgenhälfte 10 abgelegt, wobei sich der untere Reifenwulst über die untere Felgenhälfte 10 schiebt. Nun fährt der der Zubringer 20 mit der oberen Felgenhälfte 10 nach unten. Die obere Felgenhälfte 10 positioniert sich in den oberen Reifenwulst, wird verriegelt, und der Reifen 50 wird bevorzugt durch die Messaufnahme 14 mit Druckluft befüllt. Mit dem so auf dem Messstand präparierten Reifen 50 können die gewünschten Messungen wie zum Beispiel hinsichtlich Geometrie, Gleichförmigkeit und Unwucht durchgeführt werden.

Falls der nächste zu vermessende Reifen 50 die gleiche Größe wie der vorherige hat, muss in der Regel nur der Reifen 50 ausgetauscht werden, indem die obere Felgenhälfte10 temporär mit Hilfe des Zubringers 20 von der der unteren Felgenhälfte 10 abgehoben wird. Falls sich die Reifengröße ändert, muss in der Regel auch die Felge 12 gewechselt werden, und die oben beschriebenen Vorgänge beginnen von neuem.

Durch eine vorausschauende Steuerung wird das Felgenmagazin 16 noch während der Bewegung des Zubringers 50 oder während des Messbetriebs auf die erforderliche Position eingedreht. Auf diese Weise lassen sich problemlos Felgenwechselzeiten von 90 Sekunden oder weniger verwirklichen.

### Bezugszeichenliste

- 2: Anlage
- 4: Messvorrichtung
- 6: Drehlager
- 8: Druckrad
- 10: Felgenhälfte
- 12: Felge
- 14: Messaufnahme
- 16: Felgenmagazin
- 18: Ladeportal
- 20: Zubringer
- 22: Fördereinrichtung
- 24: Umlenkrolle
- 26: Transportband
- 28: Magazin-Aufnahme
- 30: Maschinenrahmen
- 32: Zubringer-Aufnahme
- 34: Hubschiene
- 36: Doppelpfeil (vertikal)
- 38: Doppelpfeil (horizontal)
- 40: Bücke
- 42: Führungsschiene
- 44: Anlagensteuerung
- 46: Sensor
- 50: Reifen

## Patentansprüche

1. Anlage (2) zur Vermessung von Reifen (50), insbesondere Kraftfahrzeugreifen, mit
• einer Messvorrichtung (4) zur Vermessung eines Reifens (50) hinsichtlich Geometrie, Gleichförmigkeit und/oder Unwucht, umfassend ein Drehlager (6) mit einer Messaufnahme (14), in der eine aus zwei Felgenhälften (10) gebildete Felge (12) zur Einspannung des Reifens (50) während der Vermessung verriegelbar ist,
• einem nach Art eines Paternosters oder Rondells ausgebildeten Felgenmagazin (16) mit einem umlaufenden Transportband (26), an welchem eine Mehrzahl von Magazin-Aufnahmen (28) zur Aufnahme eines Vorrats unterschiedlicher, insbesondere verschieden großer, Felgen (12) ausgebildet ist, und
• einem Ladeportal (18) mit einem entlang von zumindest zwei Achsen oder Richtungen verfahrbaren Zubringer (20) zum Transport einer Felge (12) vom Felgenmagazin (16) zur Messvorrichtung (4) und zurück,
wobei die Anlage eine vorausschauende Steuerung aufweist, die das Felgenmagazin (16) noch während der Bewegung des Zubringers (50) oder während des Messbetriebs auf die erforderliche Position eindreht.

2. Anlage (2) nach Anspruch 1, wobei das Felgenmagazin (16) als liegender Paternosterschrank mit von oben zugänglicher Entnahme- und Beladestelle ausgebildet ist.

3. Anlage (2) nach Anspruch 1 oder 2, wobei der Zubringer (20) mittels Schienen entlang von genau zwei Achsen, insbesondere einer horizontalen und einer vertikalen Achse, geradlinig verfahrbar ist.

4. Anlage (2) nach einem der vorangehenden Ansprüche, wobei der Zubringer (20) eine Zubringer-Aufnahme (32) zur Verrieglung mit einer Felge (12) oder einer Felgenhälfte (10) aufweist.

5. Anlage (2) nach einem der vorangehenden Ansprüche, wobei am Zubringer (20) ein Sensor (46) zur Erfassung einer Markierung an einer Felge (12) oder Felgenhälfte (10) angeordnet ist, und wobei eine zugehörige Anlagensteuerung (44) anhand der erfassten Markierung eine vom Zubringer (20) gegriffene oder zu greifende Felge (12) auf Komptabilität mit einem zugeordneten Reifen (50) überprüft.

6. Anlage (2) nach Anspruch 5, wobei die Markierung und der Sensor (46) RFID-basiert sind.

7. Verfahren zum Betreiben einer Anlage (2) nach einem der vorangehenden Ansprüche, wobei
• eine zuvor in der Messvorrichtung (4) verwendete Felge (12) mit dem Zubringer (20) von der Messaufnahme (14) zum Felgenmagazin (16) transportiert und in einer freien Magazin-Aufnahme (28) abgelegt und/oder arretiert wird,
• der Paternoster oder das Rondell anschließend derart gedreht wird, dass der Zubringer (20) eine gewünschte Felge (12) greifen kann,
• die gewünschte Felge (12) anschließend mit dem Zubringer (20) vom Felgenmagazin (16) zur Messvorrichtung (4) transportiert und in der Messaufnahme (14) arretiert wird,
wobei durch eine vorausschauende Steuerung das Felgenmagazin (16) noch während der Bewegung des Zubringers (50) oder während des Messbetriebs auf die erforderliche Position eingedreht wird.

8. Verfahren nach Anspruch 7, wobei aus eine aus zwei Felgenhälften (10) gebildete Felge (12) als eine Einheit in einer Magazin-Aufnahme (28) des Felgenmagazins (16) arretiert wird.

9. Verfahren nach Anspruch 7 oder 8, wobei der Zubringer (20) zum Ein- oder Ausfördern eines Reifens (50) in die Messvorrichtung (4) eine obere Felgenhälfte (10) von einer an der Messaufnahme (14) arretierten unteren Felgenhälfte (10) löst und abhebt.

## Claims

1. An apparatus (2) for measuring tyres (50), in particular motor vehicle tyres, comprising
• a measuring device (4) for measuring a tyre (50) with regard to geometry, uniformity and/or imbalance, comprising a rotary bearing (6) with a measuring holder (14) in which a rim (12) formed from two rim halves (10) can be locked in place to clamp the tyre (50) during measurement,
• a rim magazine (16) designed in the manner of a paternoster or carousel with a circulating conveyor belt (26) on which a plurality of magazine holders (28) is formed for holding a supply of different rims (12), in particular rims of different sizes, and
• a loading gantry (18) with a feeder (20) that can be moved along at least two axes or directions for transporting a rim (12) from the rim magazine (16) to the measuring device (4) and back,
wherein the apparatus has a predictive control which turns the rim magazine (16) into the required position while the feeder (50) is still moving or during the measuring operation.

2. The apparatus (2) according to claim 1, wherein the rim magazine (16) is designed as a horizontal paternoster cabinet with a removal and loading point accessible from above.

3. The apparatus (2) according to claim 1 or 2, wherein the feeder (20) can be linearly moved along exactly two axes, in particular a horizontal and a vertical axis, by means of rails.

4. The apparatus (2) according to any one of the preceding claims, wherein the feeder (20) has a feeder holder (32) for locking with a rim (12) or a rim half (10).

5. The apparatus (2) according to any one of the preceding claims, wherein a sensor (46) for detecting a mark on a rim (12) or rim half (10) is arranged on the feeder (20), and wherein an associated apparatus control (44) uses the detected mark to check a rim (12) gripped or to be gripped by the feeder (20) for compatibility with an assigned tyre (50).

6. The apparatus (2) according to claim 5, wherein the mark and the sensor (46) are RFID-based.

7. A method for operating an apparatus (2) according to any one of the preceding claims, wherein
• a rim (12) previously used in the measuring device (4) is transported with the feeder (20) from the measuring holder (14) to the rim magazine (16) and is placed and/or locked in a free magazine holder (28),
• the paternoster or carousel is subsequently rotated such that the feeder (20) can grip a desired rim (12),
• the desired rim (12) is subsequently transported with the feeder (20) from the rim magazine (16) to the measuring device (4) and locked in the measuring holder (14),
wherein the rim magazine (16) is turned into the required position by means of predictive control while the feeder (50) is still moving or during the measuring operation.

8. The method according to claim 7, wherein a rim (12) formed from two rim halves (10) is locked as one unit in a magazine holder (28) of the rim magazine (16).

9. The method according to claim 7 or 8, wherein for conveying a tyre (50) into or out of the measuring device (4), the feeder (20) detaches and lifts an upper rim half (10) from a lower rim half (10) locked in the measuring holder (14).

## Revendications

1. Installation (2) de mesure des pneus (50), en particulier de pneus de véhicules automobiles, avec
• un dispositif de mesure (4) pour la mesure d'un pneu (50) eu égard à la géométrie, l'uniformité et/ou le déséquilibre, comprenant un palier rotatif (6) avec un logement de mesure (14) dans lequel une jante (12) formée de deux moitiés de jante (10) peut être verrouillée pour le serrage du pneu (50) pendant la mesure,
• un magasin de jantes (16) constitué à la façon d'un système à paternoster ou d'une rosace avec une bande transporteuse en circulation (26) sur laquelle est constituée une pluralité de logements de magasin (28) pour loger une réserve de jantes (12) de tailles différentes, en particulier de tailles diverses, et
• un portique de chargement (18) avec un système d'alimentation (20) déplaçable le long d'au moins deux axes ou directions pour le transport d'une jante (12) du magasin de jantes (16) au dispositif de mesure (4) et retour,
sachant que l'installation comporte une commande prévoyante, qui tourne encore à la position nécessaire le magasin de jantes (16) pendant le déplacement du système d'alimentation (50) ou pendant le fonctionnement de mesure.

2. Installation (2) selon la revendication 1, sachant que le magasin de jantes (16) est constitué sous la forme d'une armoire à paternoster horizontale avec un poste de prélèvement et de chargement accessible par le haut.

3. Installation (2) selon la revendication 1 ou 2, sachant que le système d'alimentation (20) peut être déplacé en ligne droite au moyen de rails le long d'exactement deux axes, en particulier d'un axe horizontal et d'un axe vertical.

4. Installation (2) selon l'une quelconque des revendications précédentes, sachant que le système d'alimentation (20) comporte un logement de système d'alimentation (32) pour verrouillage avec une jante (12) ou une moitié de jante (10).

5. Installation (2) selon l'une quelconque des revendications précédentes, sachant qu'un capteur (46) est disposé sur le système d'alimentation (20) pour saisir un repérage sur une jante (12) ou moitié de jante (10), et sachant qu'une commande d'installation associée (44) vérifie à l'aide du repérage saisi une jante (12) saisie ou à saisir par le système d'alimentation (20) en ce qui concerne la compatibilité avec un pneu (50) attribué.

6. Installation (2) selon la revendication 5, sachant que le repérage et le capteur (46) sont basés sur l'identification par radiofréquence (IRF).

7. Procédé de fonctionnement d'une installation (2) selon l'une quelconque des revendications précédentes, sachant que
• une jante (12) préalablement utilisée dans le dispositif de mesure (4) est transportée avec le système d'alimentation (20) du logement de mesure (14) au magasin de jantes (16) et est déposée et/ou bloquée dans un logement de magasin (28) libre,
• le système à paternoster ou la rosace est ensuite tourné(e) de telle manière que le système d'alimentation (20) peut saisir une jante souhaitée (12),
• la jante souhaitée (12) est ensuite transportée avec le système d'alimentation (20) du magasin de jantes (16) au dispositif de mesure (4) et est bloquée dans le logement de mesure (14),
sachant que par une commande prévoyante, le magasin de jantes (16) est encore tourné à la position nécessaire pendant le déplacement du système d'alimentation (50) ou pendant le fonctionnement de mesure.

8. Procédé selon la revendication 7, sachant qu'une jante (12) formée de deux moitiés de jante (10) est bloqué en tant qu'une unité dans un logement de magasin (28) du magasin de jantes (16).

9. Procédé selon la revendication 7 ou 8, sachant que le système d'alimentation (20) libère et soulève une moitié de jante supérieure (10) d'une moitié de jante inférieure (10) bloquée sur le logement de mesure (14) pour introduire ou extraire un pneu (50) dans le dispositif de mesure (4).
